# EUROPÄISCHE PATENTSCHRIFT

(11) **EP 0 981 849 B1**
(45) Veröffentlichungstag und Bekanntmachung des Hinweises auf die Patenterteilung: **16.01.2002**
(21) Anmeldenummer: 98925523.7
(22) Anmeldetag: 02.05.1998
(51) Int. Cl.: H02H 11/00

(54) **ANORDNUNG ZUM SCHUTZ VON ELEKTRISCHEN EINRICHTUNGEN**
CIRCUIT FOR THE PROTECTION OF ELECTRICAL DEVICES
DISPOSITIF POUR LA PROTECTION DE SYSTEMES ELECTRIQUES

(30) Priorität: 13.05.1997 DE 19719919
(43) Veröffentlichungstag der Anmeldung: 01.03.2000
(73) Patentinhaber: DaimlerChrysler AG, 70567 Stuttgart (DE)
(72) Erfinder: MÄCKEL, Rainer, D-53639 Königswinter (DE); HILLE, Peter, D-64293 Darmstadt (DE); BLESSING, Alf, D-73092 Heimingen (DE)
(74) Vertreter: Maute, Hans-Jürgen, Dipl.-Ing.
(86) Internationale Anmeldenummer: EP9802606
(87) Internationale Veröffentlichungsnummer: WO9852268

(56) Entgegenhaltungen:
- DE-A- 19 501 985
- DE-A- 19 525 112
- GB-A- 1 116 941

## Beschreibung

Die Erfindung betrifft eine Schaltungsanordnung zum Schutz von Verbrauchern vor Verpolungsschäden in einem Bordnetz mit einem Begrenzungselement und einer Auslöseeinheit.

Der Einsatz bestimmter Bauelemente in Bordnetzen, insbesondere Elektrolytkondensatoren oder Halbleiter-Leistungsschalter auf MOSFET-Basis in Kraftfahrzeugbordnetzen, ist durch die Gefahr der Verpolung eingeschränkt. Bei einem Elektrolytkondensator kann eine Verpolung zur explosionsartigen Zerstörung des Kondensators mit den entsprechenden Folgeschäden führen, bei Halbleiterschaltern hingegen kann es im Verpolungsfall zu einem hohen Stromfluß über die Rückwärtsdiode der üblichen MOS-Transistoren kommen, was zu einer Zerstörung der Schalter und/oder zu einem ungewollten Einschalten von Verbrauchern führen kann. Besonders kritisch sind Brückenschaltungen.

Sowohl Elektrolytkondensatoren als auch Halbleiterelemente werden zunehmend im Bordnetzbereich von Fahrzeugen eingesetzt. Insbesondere bei Elektromotoren, die über Pulsweitenmodulation geregelt werden, sind der hohen Schaltfrequenzen wegen Halbleiterschalter notwendig. Der Einsatz von Elektrolytkondensatoren dient dem Vermeiden von Rückwirkungen auf das Bordnetz.

Die bekannte Möglichkeit, Batterien im Bordnetz mechanisch gegen Verpolung zu schützen, läßt sich in Kraftfahrzeugen nicht realisieren, da handelsübliche Batterien dafür nicht geeigent sind. Ein Schutz gegen Verpolung bei Starthilfe ist nicht realisierbar. Bekannt ist weiterhin, einzelne Bauelemente oder einzelne Baugruppen durch in Reihe geschaltete Dioden gegen Verpolschäden zu schützen. Der Nachteil ist, daß bei höheren Strömen die Verlustleistung der Schutzdioden stark ansteigt. Weitere Maßnahmen mit geringerer Verlustleistung sind Reihenschaltungen von zu schützenden Elementen mit invers geschalteten MOSFETs, wie z.B. aus der DE 39 30 896 bekannt ist. Diese Lösung ist jedoch sehr teuer.

Aus der DE-OS 29 19 022 ist bekannt, durch ein zentral geschaltetes Relais eine Verpolung zu verhindern. Das Relais benötigt im eingeschalteten Zustand jedoch eine relativ hohe Ansteuerleistung und weist zudem einen relativ hohen Einschaltwiderstand auf, so daß im Startfall mit einer Verschlechterung der Systemeigenschaften zu rechnen ist. Außerdem besteht bei einem Relais beim Abschalten von hohen Strömen die Gefahr des Verschweißens der Schaltkontakte.

Weiterhin ist aus der GB-A-1 116 941 eine Schaltungsanordnung zum Schutz von Verbrauchern vor Verpolungsschäden in einem Bordnetz bekannt, wobei ein Begrenzungselement parallel zum Bordnetz geschaltet ist und bei falscher Polung die Bordnetzspannung auf einen vorgegebenen Wert begrenzt. Das Begrenzungselement ist durch eine Diode gebildet, die eine nicht-lineare Strom-Spannungskennlinie aufweist. Ein Trennelement löst die Verbindung zum Bordnetz, sobald der vorgegebene Stromwert überschritten wird. Als Trennelement ist eine herkömmliche Schmelzsicherung vorgesehen. Die Möglichkeit einer aktiven Trennung des Bordnetzes, die zudem noch reversibel sein sollte besteht nicht.

Aus der DE-A-195 25 112 ist eine Schaltungsanordnung zum Schutz von Verbrauchern vor Verpolungsschäden in einem Bordnetz bekannt. Ein Begrenzungselement ist parallel zum Bordnetz geschaltet und begrenzt im Verpolungsfall die Bordnetzspannung. Das Begrenzungselement ist durch eine Reihenschaltung zweier Dioden gebildet, die wie bekannt eine nicht-lineare Strom-Spannungskennlinie aufweisen. Eine zusätzliche Steuerschaltung schaltet mittelbar ein Trennelement, das das Bordnetz vom Verbraucher löst, sobald ein vorgegebener Stromwert überschritten wird.

Alle aus dem Stand der Technik bekannten Schaltungsanordnungen ermöglichen auf unterschiedliche Weise einen Schutz der Verbraucher gegen Verpolung. Alle bekannten Schaltungsanordnungen sind auf diese Anwendung beschränkt und haben den Nachteil, daß sie mit weiteren zusätzlichen Sicherheitseinrichtungen nicht kombinierbar sind. Eventuelle zusätzliche Sicherheitseinrichtungen in Bordnetzen müssen jeweils für sich mit vollständigen Steuerschaltungen und Trennelementen ausgestaltet werden.

Aufgabe der Erfindung ist es daher, eine Schaltungsanordnung zum Schutz von Verbrauchern vor Verpolungsschäden in einem Bordnetz anzugeben, die nicht nur die Verbraucher vor Verpolungsschäden zu schützen vermag, sondern die zudem mit anderen Schutzeinrichtungen kombinierbar ist und als universelle Schutzeinrichtung für verschiedene Fehlerfälle einsetzbar ist.

Die Aufgabe wird durch die Merkmale der unabhängigen Ansprüche gelöst. Weiterführende und vorteilhafte Ausgestaltungen sind den Unteransprüchen und der Beschreibung zu entnehmen.

Erfindungsgemäß wird parallel zum Bordnetz ein Begrenzungselement geschaltet, welches die Spannung im Verpolungsfall auf einen unkritischen kleinen Wert begrenzt. Besonders günstig ist eine Diode mit einer stark nichtlinearen Kennlinie, wobei die Diode bei einem geringen Spannungswert, insbesondere einem Einschaltspannnungswert, niederohmig wird und im niederohmigen Zustand hohe Ströme tragen kann.

Erfindungsgemäß ist es zweckmäßig, die Auslöseeinheit zusätzlich mit einem Anschluß 3 zu versehen, welcher die Einspeisung anderer Auslösesignale zur Trennung des Bordnetzes 14 von der Batterie 10 ermöglicht. So kann die erfindungsgemäße Verpolschutzeinrichtung mit anderen Sicherheitseinrichtungen kombiniert werden, wie z.B. Crash-Sensoren oder Überstrom-Sensoren, welche bei Auftreten der jeweiligen Fehlerzustände die Trennung der Verbindung der Batterie 10 zum Bordnetz 14 veranlassen.

Vorteilhaft ist, die elektrische Verbindung zur Bordnetzversorgung im Verpolungsfall zumindest mittelbar zu lösen. Zweckmäßigerweise wird ein schaltendes Trennelement, insbesondere ein thermisch aktivierbares Sprengschaltelement, eingesetzt, welches ausgelöst wird, sobald das Begrenzungselement einen Verpolungsfall erkennen läßt. Der Vorteil ist, daß bei verschiedenen Verpolfällen sowohl Verbraucher als auch Batterie vor Verpolschäden geschützt sind.

Besonders günstig ist, den hohen Stromfluß durch das Begrenzungselement im Verpolungsfall und/oder den Spannungsabfall zum Aktivieren einer Auslöseeinheit zu verwenden. Ein unbeabsichtigtes Auslösen des Trennelementes bei kurzzeitigen falsch gepolten Spannungspulsen ist ausgeschlossen.

Im folgenden sind die Merkmale, soweit sie für die Erfindung wesentlich sind, eingehend erläutert und anhand von Figuren näher beschrieben. Es zeigen
- Fig. 1: ein Prinzipschaltbild der erfindungsgemäßen Anordnung mit Begrenzungselement, Auslöseeinheit und Trennelement,
- Fig. 2: ein Prinzipschaltbild der erfindungsgemäßen Anordnung mit Begrenzungselement, Auslöseeinheit und Trennelement,
- Fig. 3: ein Schaltbeispiel der erfindungsgemäßen Anordnung

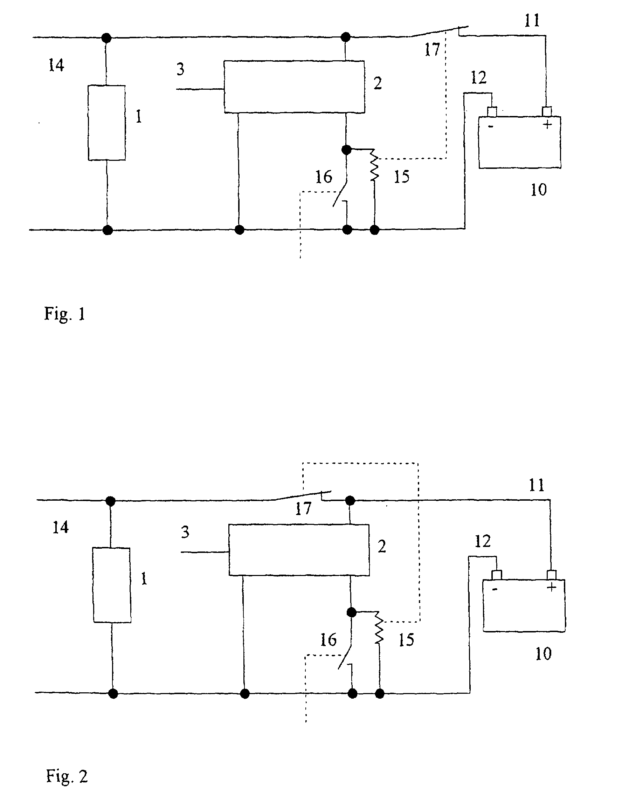

In Fig. 1 ist ein Prinzipschaltbild der erfindungsgemäßen Anordnung mit Begrenzungselement, Auslöseeinheit und Trennelement am Beispiel eines Fahrzeug-Bordnetzes dargestellt. Das Begrenzungselement 1 liegt zwischen den beiden Anschlüssen des Bordnetzes 14. Das Bordnetz 14 wird von der Bordnetzversorgung 10, insbesondere einer Batterie, versorgt. Zusätzlich kann auch ein Generator vorgesehen sein, der nicht dargestellt ist. Das Bordnetz 14 liegt zwischen der positiven Polklemme 11 und der negativen Polklemme 12 der Bordnetzversorgung. Die Auslöseeinheit 2 überwacht die Polarität der anliegenden Spannung bzw. das Begrenzungselement 1 und kann bevorzugt einen hohen Stromfluß und/oder einen Spannungsabfall an dem Begrenzungselement 1 erkennen. Das Trennelement kann durch einen Schalter 17, insbesondere einen Sprengschalter, gebildet werden, der durch ein Heizelement 15 thermisch aktivierbar ist oder durch andere geeigneten Schalter- und/oder Relais-Kombinationen, welche es ermöglichen, bei einem falsch gepolten Anschluß der Bordnetzversorgung 10, insbesondere einer Batterie, oder bei einer falsch gepolten Fremdeinspeisung der Bordnetzspannung, insbesondere bei der Starthilfe für einen Motor, die Bordnetzversorgung 10 vom Bordnetz 14 zu lösen.

Vorzugsweise wird die Polung der elektrischen Spannung zwischen den Polklemmen 11 und 12 gemessen. Für den Verpolfall, bei dem bezogen auf die z.B. mit einem Fahrzeug verbundene Polklemme 12 eine negative Spannung an der positiven Polklemme 11 anliegt, wird ein Signal erzeugt, welches die Auslöseeinheit 2 veranlaßt, die Batterie 10 vom Bordnetz 14 abzutrennen. Die Auslösung des Schalters 17 des Trennelementes kann mit Vorteil von einer oder mehreren Bedingungen abhängig gemacht werden, so daß z.B. eine Trennung der Bordnetzversorgung 10 vom Bordnetz 14 eines Fahrzeugs nur erfolgen kann, wenn der Verbrennungsmotor des Fahrzeugs nicht läuft und/oder das Fahrzeug steht und/oder der Generator keinen Strom liefert. Dazu ist es günstig, parallel zu Trennelementkomponenten, insbesondere zum Heizelement 15, einen Freigabeschalter 16 anzuordnen, der nur im geöffneten Zustand z.B. eine Bestromung des Heizelements 15 erlaubt. Diese Maßnahme ermöglicht eine hohe Betriebssicherheit des Fahrzeugs.

Im Verpolungsfall wird erfindungsgemäß die negative Bordnetzspannung zunächst durch ein Element 1, welches vorzugsweise einen hohen Strom aufnehmen kann, begrenzt Damit wird sichergestellt, daß die bis zum Auslösen des Trennelements am Bordnetz 14 anliegende negative Spannung keinen für die restlichen sich am Bordnetz 14 befindlichen Bauelemente kritischen Wert erreichen kann. Vorzugsweise ist das Begrenzungselement 1 eine Generatordiode, die nur bei hohen Strömen in Durchlassrichtung einschaltbar ist und im Zustand der hohen Leitfähigkeit hohe elektrisch Ströme, insbesondere mehr als 100 Ampere, tragen kann. Damit ist sichergestellt, daß sporadisch auftretende, energiearme negative Impulse wie z.B. Schaffnerpulse des Typs Nr. 1 oder Nr. 3a, am Bordnetz 14 keine unerwünschte Auslösung des Trennelementes bewirken. Der Strompegel bzw. die Begrenzungsspannung kann durch das Begrenzungselement, insbesondere die Diode, vorgegeben werden. Zur Auslösung des Trennelementes ist ein ausreichend hoher Stromfluß durch das Begrenzungselement 1 notwendig, so daß ein etwaiger Verpolfall sicher erkennbar ist.

Der am Begrenzungselement 1 durch den hohen Stromfluß erzeugte niedrige verpolte Spannungsabfall wird von der Auslöselektronik 2 erkannt. Diese steuert durch und erzeugt somit einen Stromfluß im Element 15, welches zur Auslösung des Trennelements führt. Ist das Trennelement insbesondere durch ein pyrotechnisches Trennelement gebildet, wird Element 15 durch den zugehörigen Zünder gebildet. Die Auslösung der Sprengladung trennt die Batterie 10 vom Bordnetz 14.

Da die Auslöseeinheit 2 nur bei einem hohen Stromfluß durch das Begrenzungselement 1 anspricht, wird auch sichergestellt, daß insbesondere im Fall einer Verpolung bei Starthilfe für ein Fahrzeug das Trennelement, insbesondere den Schalter 17 nur öffnet, wenn die Fahrzeugbatterie 10 ausreichend schwach ist und die verpolt angeschlossene Fremdbatterie ausreichend Strom liefern kann, um tatsächlich Schäden am Bordnetz verursachen zu können. Ist dies nicht der Fall, wird die negative Spannung am Bordnetz 14 nicht so groß, daß ein Abschalten notwendig ist.

Ist die am Begrenzungselement 1 abfallende Spannung nicht groß genug, damit ein ausreichend hoher Auslösestrom für das Auslöseelement 2 fließen kann, läßt sich eine Erhöhung der Spannung an der Auslöseeinheit 2 dadurch erzeugen, daß die Auslöseeinheit 2 batterieseitig an den Schalter 17 des Trennelements angeschlossen wird. Dies ist in Figur 2 dargestellt. Der Vorteil ist, daß der über das Begrenzungselement 1 fließende hohe Strom einen relativ hohen, über dem Trennelement, insbesonders dem Schalter 17, sowie über dem etwaigen Verbindungskabel und den etwaigen Übergangswiderständen abfallenden Spannungsabfall verursacht, der für die Auslösung der Auslöseeinheit nutzbar ist.

Für den Fall, daß kein Verpolfall vorliegt, hat weder das Begrenzungselement 1 noch die Auslöseschaltung 2 einen Einfluß auf das Bordnetz 14. Besonders günstig ist, daß das Begrenzungselement 1 und die Auslöseschaltung 2 im normalen Betriebszustand ohne Verpolfall keine Leistung konsumieren.

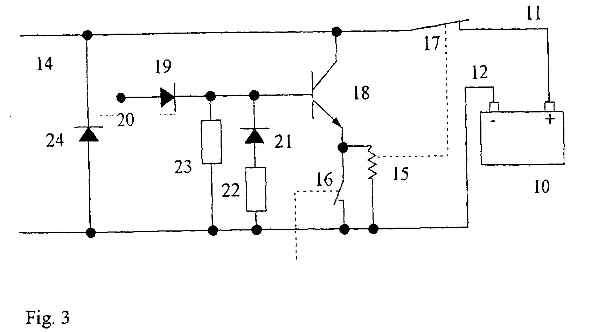

In Figur 3 ist ein Schaltungsbeispiel einer erfindungsgemäßen Verpolschutzschaltung angegeben. Eine erste Diode 24, vorzugsweise eine Generatordiode, die für hohe Ströme ausgelegt ist, liegt parallel zum Bordnetz 14. Die Kathode dieser ersten Diode 24 wird mit der positiven Polkiemme 11 verbunden, die Anode mit der negativen Polklemme 12, insbesondere dem Massepotential der Schaltung. Die Auslöseeinheit 2 wird durch einen Bipolartransistor 18, eine zweite Diode 21, einen ersten ohmschen Widerstand 22, einen zweiten ohmschen Widerstand 23 und eine dritte Diode 19 gebildet.

Soll im Verpolfall erst bei einer höheren negativen Spannung abgeschaltet werden, kann die erste Diode 24 durch eine Reihenschaltung von zwei oder mehr Dioden ersetzt werden. Es ist zweckmäßig, mehrere Dioden durch Parallelschaltung und/oder Reihenschaltung zu einem Begrenzungselement 1 zu kombinieren und so dessen Stromtragfähigkeit und Spannungsbegrenzungswert an die erforderlichen Spannungs- und/oder Stromwerte anzupassen.

Parallel zur ersten Diode 24 liegt eine Reihenschaltung aus einem Bipolartransistor 18 und einem Zünder 15 des Trennelementes. Der Kollektor des Transistors 18 ist mit der positiven Polklemme 11, der Emitter des Transistors 18 mit dem Zünder 15 verbunden. Die Basis wird mit der Kathode einer zweiten Diode 21 verbunden, deren Anode mit der negativen Polklemme 12 verbunden ist. Die Anode kann auch über einen ersten Widerstand 22 mit der Polklemme 12 verbunden sein. Parallel zu dieser zweiten Diode 21 liegt noch ein zweiter Widerstand 23, der ein ungewolltes Einschalten des Transistors 18 verhindern soll.

Falls das Begrenzungselement 1 durch eine Reihen- und/oder Parallenschaltung mehrerer Dioden gebildet ist, wird die zweite Diode 21 zweckmäßigerweise ebenfalls durch eine Reihen- und oder Parallelschaltung von Dioden an die Spannungs- und Stromwerte des Begrenzungselements 1 angepaßt.

Eine dritte Diode 19, deren Kathode mit der Basis des Transistors 18 verbunden ist, erlaubt die Einkopplung von anderen Auslösesignalen am Eingang 20 der Auslöseeinheit 2, der mit der Anode der Diode 19 verbunden ist.

Bevorzugt ist der Kollektor-Emitter-Spannungsabfall am Transistor 18 kleiner als der Spannungsabfall über der ersten Diode 24. Der Transistor 18 wird im Verpolfall vorzugsweise im Inversmode betrieben, da in diesem Fall der Spannungsabfall über der Kollektor-Emitterstrecke des Transistors am geringsten ist. Somit kann auch mit einer geringen negativen Spannung über dem Begrenzungselement 1 der Zünder 15 mit einem ausreichend hohen Strom versorgt werden. Zweckmäßig ist, den Spannungsabfall an der ersten Diode 24 geeignet vorzugeben.

Sollte beim Öffnen des Schalters 17 ein negativer Spannungsimpuls auf dem Bordnetz 14 entstehen, würde in dieser Anordnung, bei dem der Schalter 17 batterieseitig vom Begrenzungselement 1 angeordnet ist, die negative Spannung vom Begrenzungselement 1 auf einen für die am Bordnetz 14 angeschlossenen Verbraucher unschädlichen Wert begrenzt.

## Patentansprüche

1. Schaltungsanordnung zum Schutz von Verbrauchern in einem Bordnetz (14) mit einem Verpolschutz aus einem Begrenzungselement (1) mit nicht-linearer Strom-Spannungskennlinie , das parallel zum Bordnetz (14) geschaltet ist und die Bordnetzspannung bei falscher Polung auf einen vorgegebenen Wert begrenzt, mit einer Auslöseeinheit (2), die zumindest mittelbar ein Trennelement (17) ansteuert, das die Verbindung zur Bordnetzversorgung (10) trennt, wenn in der Auslöseeinheit (2) ein Auslösesignal erzeugt wird,
**dadurch gekennzeichnet,**
**daß** die Auslöseeinheit (2) einen zusätzlichen Anschluß (3) aufweist, welcher die Einspeisung anderer Auslösesignale aus anderen Sicherheitseinrichtungen in die Auslöseeinheit zur Trennung des Bordnetzes (14) von der Bordnetzversorgung (10) ermöglicht.

2. Schaltungsanordnung nach Anspruch 1, **dadurch gekennzeichnet, daß** die anderen Sicherheitseinrichtungen aus Crash-Sensoren oder Überstromsensoren bestehen.

3. Schaltungsanordnung nach einem der Ansprüche 1 bis 2, **dadurch gekennzeichnet, daß** das Begrenzungselement (1) durch mindestens eine Generatordiode gebildet ist.

4. Schaltungsanordnung nach einem der Ansprüche 1 bis 3,
**dadurch gekennzeichnet,**
**daß** das Trennelement (17) ein Sprengschalter ist.

5. Schaltungsanordnung nach einem der Ansprüch 1 bis 4,
**dadurch gekennzeichnet,**
**daß** das Begrenzungselement (1) durch eine erste Diode (24) gebildet ist, die parallel zum Bordnetz (14) geschaltet ist, wobei die Kathode der ersten Diode (24) mit der positiven Polklemme (11) und die Anode mit der negativen Polklemme (12) des Bordnetzes (14) verbunden ist, daß parallel zum Begrenzungselement (1) eine Reihenschaltung aus einem Bipolartransistor (18) und einem Zünder (15), welcher das Trennelement (17) auslöst, angeordnet ist, wobei der Kollektoranschluß des Transistors (18) mit der positiven Polklemme (11), der Emitteranschluß des Transisors (18) mit dem Zünder (15) und der Basisanschluß des Transistors (18) mit der Kathode einer zweiten Diode (21) verbunden ist, daß der Anodenanschluß der zweiten Diode (21) zumindest mittelbar mit der negativen Polklemme (12) des Bordnetzes verbunden ist und parallel zu der zweiten Diode 21 ein erster Widerstand 23 angeordnet ist.

6. Schaltungsanordnung nach Anspruch 5,
**dadurch gekennzeichnet,**
**daß** die Kathode einer dritten Diode (19) mit der Basis des Transistors (18) verbunden ist und mit der Anode einen Signaleingang (20) bildet.

7. Schaltungsanordnung nach Anspruch 5,
**dadurch gekennzeichnet,**
**daß** die zweite Diode (21) mit einem zweiten Widerstand (22) in Reihe geschaltet ist.

## Claims

1. Circuit arrangement for the protection of consumers in an on-board mains (14) with a polarity reversal protection, consisting of a limiting element (1) with a non-linear current/voltage characteristic, which is connected in parallel with the on-board mains (14), and limits the on-board mains voltage to a predetermined value in the case of incorrect polarity, and with a trigger unit (2) which controls in drive at least indirectly a separating element (17) which separates the connection to the on-board mains current supply (10) when a trigger signal is produced in the trigger unit (2), **characterised in that** the trigger unit (2) has an additional connection (3) which enables the supply of other trigger signals from other protection devices into the trigger unit for separating the on-board mains (14) from the on-board mains current supply (10).

2. Circuit arrangement according to claim 1, **characterised in that** the other protection devices consist of crash sensors or excess current sensors.

3. Circuit arrangement according to one of claims 1 and 2, **characterised in that** the limiting element (1) is formed by at least one generator diode.

4. Circuit arrangement according to one of claims 1 to 3, **characterised in that** the separating element (17) is a spring switch.

5. Circuit arrangement according to one of claims 1 to 4, **characterised in that** the limiting element (1) is formed by a first diode (24), which is connected in parallel to the on-board mains (14), wherein the cathode of the first diode (24) is connected with the positive pole terminal (11) and the anode with the negative pole terminal (12) of the on-board mains (14), that a series circuit of a bipolar transistor (18) and an igniter (15) which triggers the separating element (17), is arranged parallel to the limiting element (1), wherein the collector connection of the transistor (18) is connected with the positive pole terminal (11), the emitter connection of the transistor (18) is connected with the igniter (15) and the base connection of the transistor (18) is connected with the cathode of a second diode (21), and that the anode connection of the second diode (21) is connected at least indirectly with the negative pole terminal (12) of the on-board mains and a first resistor (23) is arranged parallel to the second diode (21).

6. Circuit arrangement according to claim 5, **characterised in that** the cathode of a third diode (19) is connected with the base of the transistor (18) and forms a signal input (20) by the anode.

7. Circuit arrangement according to claim 5, **characterised in that** the second diode (21) is connected in series with a second resistor (22).

## Revendications

1. Montage pour protéger des appareils d'utilisation dans un réseau de bord (14) comportant un système de protection contre une inversion de polarité, constitué par un élément de limitation (1) possédant une courbe caractéristique courant-tension non linéaire, et qui est branché en parallèle avec le réseau de bord (14) et limite la tension du réseau de bord à une valeur prédéterminée dans le cas d'une polarité erronée, et comportant une unité de déclenchement (2), qui commande au moins indirectement un élément de sectionnement (17), qui déconnecte la liaison pour le système d'alimentation (10) du réseau de bord lorsqu'un signal de déclenchement est produit dans l'unité de déclenchement (2), **caractérisé en ce que** l'unité de déclenchement (2) comporte une borne supplémentaire (3, qui permet l'envoi d'autres signaux de déclenchement provenant d'autres dispositifs de sécurité dans l'unité de déclenchement pour déconnecter le réseau de bord (14) du système d'alimentation (10) du réseau de bord.

2. Montage selon la revendication 1, **caractérisé en ce que** les autres dispositifs de sécurité sont constitués par des détecteurs de crash ou par des détecteurs de surintensité.

3. Montage selon l'une des revendications 1 et 2, **caractérisé en ce que** l'élément de limitation (1) est formé par au moins une diode de générateur.

4. Montage selon l'une des revendications 1 à 3, **caractérisé en ce que** l'élément de sectionnement (17) est un interrupteur à explosion.

5. Montage selon l'une des revendications 1 à 4, **caractérisé en ce que** l'élément de limitation (1) est formé par une première diode (24), qui est branchée en parallèle avec le réseau de bord (14), la cathode de la première diode (24) étant reliée à la borne formant pôle positif (11) tandis que l'anode est reliée à la borne formant pôle négatif (12) du réseau de bord (14), qu'un circuit série formé d'un transistor bipolaire (18) et d'un dispositif d'amorçage (15), qui déclenche l'élément de sectionnement (17), est branché en parallèle avec l'élément de limitation (1), la borne de collecteur du transistor (18) étant reliée à la borne formant pôle positif (11), la borne d'émetteur du transistor (18) étant reliée à l'unité d'amorçage (15) et la borne de base du transistor (18) étant reliée à la cathode d'une seconde diode (20), que la borne d'anode de la seconde diode (21) est reliée au moins indirectement à la borne formant pôle négatif (12) du réseau de bord et qu'une première résistance (23) est disposée en parallèle avec la seconde diode (21).

6. Montage selon la revendication 5, **caractérisé en ce que** la cathode d'une troisième diode (19) est reliée à la base du transistor (18) et forme, avec l'anode, une entrée (20) pour les signaux.

7. Montage selon la revendication 5, **caractérisé en ce que** la seconde diode (20) est branchée en série avec une seconde résistance (22).
